# EUROPEAN PATENT APPLICATION

(11) **EP 4 502 367 A1**
(43) Date of publication of application: **05.02.2025**
(21) Application number: 23189136.7
(22) Date of filing: 02.08.2023
(51) Int. Cl.: F03D 15/10, F03D 9/25

(54) **WIND TURBINE DRIVETRAIN**

(71) Applicant: Siemens Gamesa Renewable Energy A/S, 7330 Brande (DK)
(72) Inventor: Rogg, Andreas, 22605 Hamburg (DE); Steimle, Nils, 24361 Haby (DE); Castillo Cortina, Carlos Eden, 21376 Salzhausen (DE)
(74) Representative: SGRE-Association

(57) **Abstract**

The invention describes a wind turbine drivetrain comprising a planetary gearbox (4) for converting rotation of a low-speed shaft (2) to rotation of a high-speed gearbox output shaft (44); an axial sleeve (42S) extending axially outward from the gearbox (4) and enclosing the gearbox output shaft (44); a generator (6) mounted coaxially to the gearbox (4), comprising a rotor (64) arranged about the cylindrical sleeve (42S); a bearing cartridge (8) arranged between the gearbox (4) and the generator (6), which bearing cartridge (8) comprises a number of roller bearings (80) held between a stationary bearing part (8S) and a rotary bearing part (8R); and a torque transfer assembly (1) for transferring rotation of the gearbox output shaft (44) to the generator rotor (64), which torque transfer assembly (1) incorporates the rotary bearing part (8R) and is arranged to extend between the nondrive end of the gearbox output shaft (44) and the generator rotor (64). The invention further describes a method of assembling such a wind turbine drivetrain.

## Description

### Background

The drivetrain of a wind turbine can comprise a low-speed shaft turned by the aerodynamic rotor, a gearbox with a high-speed output shaft, and a generator connected to the high-speed shaft. In a known type of medium-speed powertrain, the gearbox is a multistage planetary gearbox, and the generator is coaxially mounted to the gearbox. In such a realization, the low-speed shaft, the planetary gearbox sun shaft and the generator rotor essentially share a common axis of rotation. Since the low-speed shaft and the gearbox sun shafts can be hollow, the coaxial alignment of the drivetrain components can be exploited by arranging a hollow tube in the interior spaces of the low-speed shaft, gearbox and generator, and using this hollow tube as a cable conduit for electrical cables to the hub, for example cables from a wind turbine controller to the pitch systems of the rotor blades.

Instead of securing the generator housing to a bedplate or other fixed structure, the generator housing is attached in cantilever fashion to the gearbox housing. The cantilever connection between generator and gearbox has the effect that vibration from the generator is transferred through the gearbox to the wind turbine tower. As a result, certain unfavourable frequencies can be amplified. A relatively long gearbox output shaft can help mitigate noise from the drivetrain. However, since the spline connection at the end of the gearbox output shaft requires oil lubrication (including connection to an oil supply and a drain), but the spline connection is effectively located in the generator space, it is challenging to realise a cantilever gearbox/generator design with a long gearbox output shaft. This is because, in a tilted drivetrain (a design that is common in large wind turbines), a gearbox-generator bearing between the output shaft and generator is effectively placed at the lowest point of an oil lubrication circuit. A longer output shaft displaces this lowest point even further downwards, making it difficult to realise the drain (which is generally at the lowest point). For these reasons, cantilever drivetrain designs for large wind turbines generally implement a short gearbox output shaft.

In the cantilever gearbox-generator connection, a bearing assembly that primarily serves to support the gearbox output shaft may also be used to center and support the generator rotor. It is advantageous to realize this "gearbox-generator bearing" in the form of a cartridge that can be handled as a single unit. It is desirable to use two parallel roller bearings (for example two tapered roller bearings) spaced apart by some distance and enclosed in the bearing cartridge, in order to support the weight of the generator rotor and to transfer forces from the sun gear of the final gearbox planetary stage to the generator rotor. Such a bearing cartridge can have an axial length of 0.5 - 1 m and a mass in the order of 1,000 kg. In a prior art approach, a housing of the bearing cartridge is generally secured to the gearbox housing or generator housing.

In known cantilever designs, placement of the gearbox/generator bearing may require complete disassembly of the generator in order to access a component in need of maintenance, which may entail a complex and time-consuming process of dismantling and removing the separate components of the gearbox/generator bearing. Since it is not unusual for an internal component of the generator or gearbox to require maintenance at some stage, the cost of lengthy disassembly and assembly procedures can be a significant contribution to the overall cost of energy.

It is therefore an object of the invention to provide a drivetrain configuration that facilitates straightforward maintenance of the generator and gearbox output shaft.

This object is achieved by the claimed wind turbine drivetrain and by the claimed methods of assembling and disassembling the drivetrain.

### Description

According to the invention, the wind turbine drivetrain comprises a planetary gearbox for converting rotation of a low-speed shaft to rotation of a high-speed gearbox output shaft; an axial sleeve extending outward from the non-drive end of the gearbox and enclosing the gearbox output shaft; and a generator mounted coaxially to the gearbox, comprising a rotor arranged about the axial sleeve. Since the gearbox output shaft also extends from the gearbox in the downwind direction, the axial sleeve effectively surrounds the gearbox output shaft. The drivetrain further comprises a generator mounted coaxially to the planetary gearbox, with a rotor arranged about the axial sleeve; a bearing cartridge arranged between the gearbox and the generator, comprising a number of roller bearings held between a stationary bearing part and a rotary bearing part; and a torque transfer assembly comprising an outer part extending about the outside of the axial sleeve and connected to the generator rotor, an inner part extending about the inside of the axial sleeve and connected to the gearbox output shaft, and a radial portion extending between the downwind ends of the inner and outer parts. The torque transfer assembly effectively extends between the generator rotor and the gearbox output shaft, and incorporates or is connected to the rotary bearing part, i.e. the outer part of the torque transfer assembly and the rotary bearing part can be one and the same, or can be connected together. In this way, the torque transfer assembly transfers rotation of the gearbox output shaft to the generator rotor.

Since the inner part of the torque transfer assembly is connected to the gearbox output shaft, and the outer part of the torque transfer assembly is connected to the generator rotor, the connection between the gearbox and the generator can be regarded as an arrangement of nested annular components, these being the axial sleeve, the inner part of the torque transfer assembly and the outer part of the torque transfer assembly. The axial sleeve can be formed as an extension of the gearbox housing at its non-drive end, or can be mounted to the non-drive end of the gearbox housing. In the following, the terms "axial sleeve", "gearbox housing sleeve", "cylindrical sleeve" and simply "sleeve" may be used interchangeably.

An advantage of the inventive drivetrain is that it offers straightforward access to components of the drivetrain that are otherwise difficult to reach. For example, the inventive configuration allows removal of the gearbox output shaft without having to completely dismantle the bearing. This saves time that would otherwise be needed to dismantle the bearing in order to access the output shaft for a maintenance procedure, and to re-assemble the bearing after completion of the maintenance procedure.

A further advantage of the invention is that the novel approach to the interface between gearbox and generator facilitates variation of the length of the gearbox output shaft. It can be desirable to adjust the length of the gearbox output shaft, thereby adjusting its stiffness to achieve an optimal level of generator vibration noise. The gearbox output shaft can have a length in the order of 1 m or more (extending to the downwind end of a correspondingly long axial sleeve). The inventive drivetrain can therefore contribute to reduction of wind turbine noise, making it easier for a wind turbine to comply with noise regulations at an immission point.

Particularly advantageous embodiments and features of the invention are given by the dependent claims, as revealed in the following description. Features of different claim categories may be combined as appropriate to give further embodiments not described herein.

The hub of an operational wind turbine is generally always aligned so that the aerodynamic rotor faces into the wind, and a common convention is to refer to the front end of a wind turbine drivetrain component as its "drive end" or "upwind end", while the rear end of such a component is referred to as its "non-drive end" or "downwind end". This convention is adhered to herein.

As explained above, the connection between the gearbox and the generator can be regarded as an arrangement of nested annular components. The overall shape of the torque transfer assembly is annular with a U-shaped cross-section, and the torque transfer assembly is essentially "wrapped about" the axial sleeve. The torque transfer assembly shall be understood to include the rotary bearing part, either by directly incorporating the rotary bearing part in the torque transfer assembly or by using fasteners to secure the rotary bearing part to the torque transfer assembly.

For example, the rotary bearing part can be the outer part of the torque transfer assembly, extending from the generator rotor to the radial portion of the torque transfer assembly. In this case, the inner part and radial portion of the torque transfer assembly both serve to transfer torque from the generator output shaft to the rotary bearing part, which in turn transfers torque to the generator rotor.

In another embodiment, the rotary bearing part is not directly part of the torque transfer assembly. Instead, the generator rotor can comprise an inner annular support structure extending from the drive end of the rotor to the radial portion of the torque transfer assembly, so that this annular support structure acts as the outer part of the torque transfer assembly. The downwind end of the rotary bearing part can be secured to the radial portion of the torque transfer assembly. In this case, the inner part and the radial portion of the torque transfer assembly both serve to transfer torque from the generator output shaft to the generator rotor, while the rotary bearing part only transfers the non-torque loads.

In one embodiment of the inventive drivetrain, the stationary bearing part is mounted to the outside of the axial sleeve, and the outer part of the torque transfer assembly includes or is connected to the rotary bearing part. In such an embodiment, the inner part of the torque transfer assembly is arranged on the inside of the axial sleeve, and is preferably connected to the gearbox output shaft by a spline arrangement. In this embodiment, a seal is preferably arranged between the rotary bearing part and the stationary bearing part at the upwind end of the bearing cartridge. The seal can be fixed to the rotary bearing part or to the stationary bearing part.

In an alternative embodiment of the inventive drivetrain, the stationary bearing part is mounted to the inside of the axial sleeve, and the inner part of the torque transfer assembly includes or is connected to the rotary bearing part. The stationary bearing part is preferably fixed to the axial sleeve using a number of axially arranged fasteners which can be screwed into axial threaded holes provided in the annular downwind face of the axial sleeve. In an exemplary embodiment, the inner part of the torque transfer assembly can have the shape of a cylinder that fits between the gearbox output shaft and the rotary bearing part, and which is connected to the gearbox output shaft by a spline arrangement. The radial portion of the torque transfer assembly can be secured to the rotary bearing part by a number of axially arranged fasteners which can be screwed into axial threaded holes provided in the downwind face of the rotary bearing part. In these configurations, a seal between the rotary and stationary bearing parts is preferably arranged at the downwind end of the bearing cartridge.

In a preferred embodiment of the invention, the inner part, radial portion and outer part of the torque transfer assembly are manufactured as a single component. Such a realisation of the torque transfer assembly can be particularly effective at transferring torque from the gearbox output shaft to the generator rotor, and can ensure that only non-torque loads are transferred to the rotary bearing part. This configuration can therefore extend the lifetime of the bearing.

In a multi-part realisation, the radial portion can be an extension of the inner part or the outer part. The radial portion extends in an essentially radial direction relative to the axis of rotation of the drivetrain. As will become clear from the drawings, a torque transfer assembly part that is shaped to include the radially extending portion is generally the "non-bearing part" of the torque transfer assembly.

In a particularly preferred embodiment of the invention, the bearing cartridge is connected to a lubrication circuit of the gearbox. Fluid lines (oil supply and drain) of the lubrication circuit are arranged to pass from the gearbox through the interior of the generator to the stationary bearing part. Lubrication and/or drain lines might be included in the torque transfer assembly and the rotary bearing part. In a particularly preferred embodiment of the invention, the drivetrain comprises a spline connection between the gearbox output shaft and the inner part of the torque transfer assembly. Such a spline connection requires lubrication, and is preferably incorporated in the gearbox lubrication circuit described above. The inventive drivetrain therefore presents a way of overcoming the problem described in the introduction, i.e. the problem of how to provide lubrication to a spline connection of a long gearbox output shaft.

In a preferred embodiment of the invention, the drivetrain is constructed to accommodate a cable conduit or "pitch tube". This cylindrical hollow cable conduit or tube may be secured to the planet carrier of the first stage of the gearbox and rotates at the same speed as the low-speed main shaft of the drivetrain. The downwind end of the cable conduit can protrude some distance from the downwind end of the gearbox output shaft. Since the gearbox output shaft turns at a faster rate than the cable conduit (which turns at the same rate as the low-speed shaft), the torque transfer assembly is preferably rotationally isolated from the cable conduit. In a preferred embodiment of the invention, the drivetrain comprises a further bearing between the cable conduit and the torque transfer assembly. This cable conduit bearing may be referred to herein as a "support bearing" and can be realized as a roller bearing or equivalent. This support bearing is also preferably connected to the gearbox lubrication circuit.

The stiffness of the cable conduit can be locally increased, for example a tight-fitting annular bushing or cuff with a high degree of stiffness may be arranged about the cable conduit adjacent to the downwind end of the gearbox output shaft. The form fit between the cable conduit and the annular support cuff ensures that the cuff and cable conduit turn as one.

The drivetrain can also comprise a seal between the torque transfer assembly and the cable conduit, or between the torque transfer assembly and the annular cuff. This seal can be realised as a double lip seal to prevent gearbox oil from entering the generator, and to prevent contaminants from the generator from entering the sealed-off space. The cable conduit bearing and seal can be attached to the relevant part of the nested torque transfer assembly, for example to the inside surface of the inner part.

After mounting the drive end of the generator housing (already carrying the armature windings) in cantilever to the non-drive end of the gearbox, assembly of the inventive wind turbine drivetrain can be performed by the following exemplary sequence of steps: The generator rotor (already carrying the field magnets) is put into place about the axial gearbox housing sleeve and temporarily secured to the gearbox housing and/or generator housing using suitable fixation means. The bearing cartridge is then moved into the generator and the stationary bearing part is secured to the sleeve. Depending on the choice of design, the rotary bearing part will be assigned either to the inner part of the torque transfer assembly or to the outer part of the torque transfer assembly. As explained above, the torque transfer assembly can be a one-piece component or can comprise two or more components that are secured by fasteners. After completion of this stage of assembly, the outer part of the torque transfer assembly (which can be part of a one-piece torque transfer assembly, the rotary bearing part, or a cylindrical rotor support structure, depending on the chosen design) is secured to the generator rotor (using threaded fasteners); and the inner part of the torque transfer assembly (which can be part of a one-piece torque transfer assembly or the rotary bearing part, depending on the chosen design) is secured to gearbox output shaft (by means of a spline arrangement and threaded fasteners). Assembly is completed by attaching a brake disk to an end face of the torque transfer assembly, releasing the temporary fixation means, and closing the generator housing by a suitable cover or end-plate.

During the lifetime of the wind turbine, it may be necessary to perform maintenance on the gearbox output shaft, the gearbox-generator bearing, or another component in that part of the drivetrain. According to the invention, a method of performing maintenance on the drivetrain described above can be performed for example as follows: after removing the generator housing end-plate, temporarily securing the generator rotor as described above and removing the brake disk, further components can be removed to access a part in need of maintenance. For example, a support cuff, a seal and a bearing can be removed from about the cable conduit to access an axial fixation of the gearbox output shaft to the torque transfer assembly. Depending on how the torque transfer assembly is constructed (as a single part or comprising several parts), the torque transfer assembly can then be removed after releasing the appropriate axially-oriented fasteners.

During the lifetime of the wind turbine, it may be necessary to exchange the generator rotor and/or the stator. The inventive maintenance method can involve a generator exchange procedure and can be performed as follows: after removing a generator housing end-plate, and temporarily securing the generator rotor to the generator housing, fasteners are removed as necessary to release the outer part of the torque transfer assembly from the generator rotor. The outer part of the torque transfer assembly can then be removed from within the generator. A further set of fasteners is then removed to release the generator housing from the gearbox housing. The generator rotor and stator can then be removed, while leaving the bearing cartridge in place on the axial sleeve. The inventive drivetrain design therefore facilitates a favourably quick and straightforward way of exchanging the rotor and/or stator, without the need for a time-consuming and expensive step of dismantling and re-assembling the gearbox-generator bearing.

During the lifetime of the wind turbine, it may be necessary to exchange the gearbox output shaft. The inventive maintenance method can involve a gearbox output shaft exchange procedure which can be performed as follows: after removing a generator housing end-plate and removing the brake disk, further components can be removed as described above (e.g. a support cuff, a seal and a bearing of the cable conduit). Depending on how the torque transfer assembly is constructed (as a single part or comprising several parts), this can then be removed after releasing the appropriate axially-oriented fasteners. The gearbox output shaft can then be removed, leaving the bearing cartridge in place on the axial sleeve.

If it is desired to remove the gearbox-generator bearing, further fasteners are then removed to release the bearing cartridge from the axial sleeve. The bearing cartridge can then be pulled off the axial sleeve and lifted out from inside the generator.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an embodiment of the inventive drivetrain;
Figures 2 - 9 show various gearbox-generator mounting configurations and modes of disassembly for the drivetrain of Figure 1;
Figure 10 shows a mounting arrangement of gearbox and generator in a prior art drivetrain.

In the diagrams, like numbers refer to like objects throughout. Objects in the diagrams are not necessarily drawn to scale.

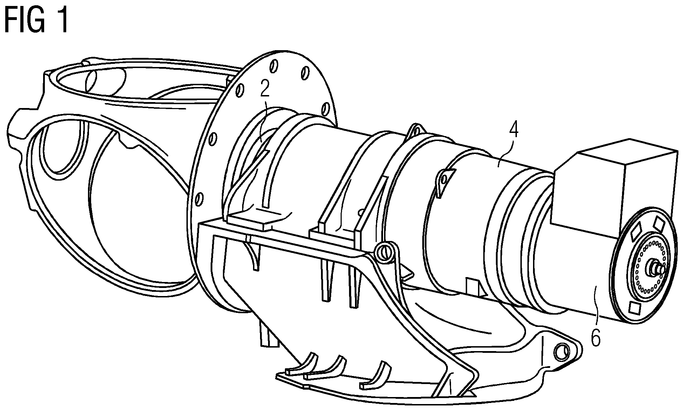

Figure 1 shows an embodiment of the inventive wind turbine drivetrain 1. The drivetrain 1 comprises a planetary gearbox 4 for converting rotation of a low-speed shaft 2 to rotation of a high-speed gearbox output shaft. It is assumed that the low-speed main shaft of the wind turbine drives the planet carrier in the first stage of the gearbox 4. The gearbox output shaft is connected to or integral with the sun gear of the final stage of the gearbox. The generator 6 mounted coaxially to the gearbox 4 in cantilever fashion. The generator rotor is driven by the gearbox output shaft.

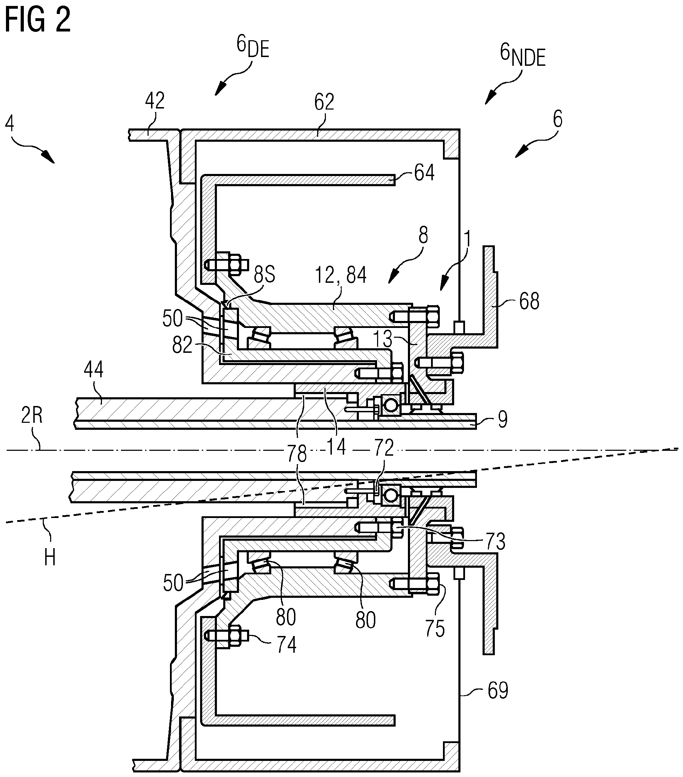

The invention proposes an improvement to the connection between generator and gearbox in such a drivetrain, and Figures 2 - 8 show various ways in which the torque transfer assembly 1 can be realised.

The drawings illustrate the cantilever mounting arrangement used to connect the generator housing 62 to the gearbox housing 42. It shall be understood that the rotation axis 2R of the drivetrain is actually tilted by about 6° relative to the horizontal H as indicated in Figure 2.

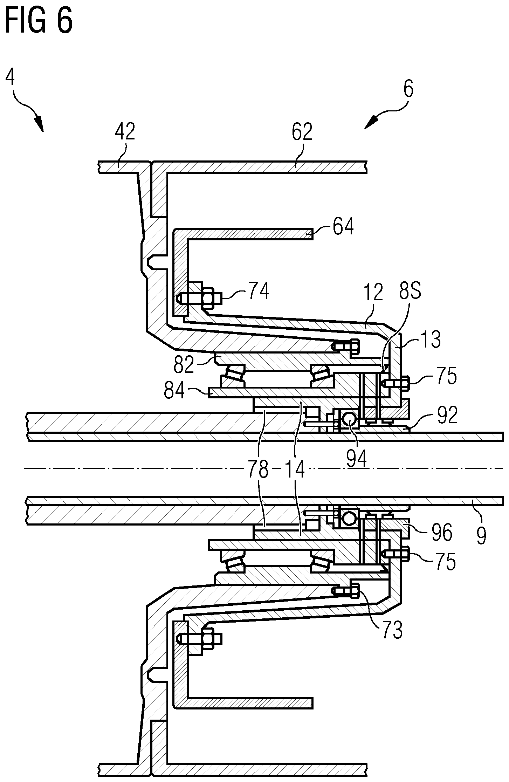

In the embodiments shown here, the gearbox housing 42 comprises an axial sleeve 42S extending axially in the downwind direction, into the generator 6. In other embodiments, an axial sleeve can be mounted to the gearbox housing 42. The gearbox output shaft 44 extends towards the downwind end of this axial sleeve 42S. The axial sleeve 42S can be shaped to enclose the bearing cartridge 8, or to be enclosed by the bearing cartridge 8. Each diagram shows a cross-section at the junction between gearbox 4 and generator 6, showing the axial sleeve 42S extending outward in the downwind direction from the non-drive end 4_{NDE} of the gearbox housing 42 and into the generator 6. The axial sleeve 42S can be formed in one piece with the non-drive end 4_{NDE} of the gearbox housing 42. Since the gearbox output shaft 44 also extends from the gearbox 4 in the downwind direction, the sleeve 42S effectively surrounds the gearbox output shaft 44. In the embodiments of Figures 1 - 5, the gearbox-generator bearing 8 is arranged on the outside of the axial sleeve 42S. In the embodiments of Figures 6 to 9, the gearbox-generator bearing 8 is arranged inside the axial sleeve 42S.

The generator rotor 64 can have an essentially cylindrical or barrel shape, closed at its drive end and open at its non-drive end. The generator rotor 64 can carry an arrangement of magnets 6F about its outer annular surface, and a corresponding arrangement of windings 6A can be arranged about the inner annular surface of the generator housing 42.

The drawings also show the bearing cartridge 8, comprising a parallel arrangement of two tapered roller bearings 80 between a stationary bearing part 82 and a rotary bearing part 84. The bearing cartridge 8 can be handled as a single component.

The torque transfer assembly 1 is used to connect the generator rotor 64 to the gearbox output shaft 44, and to allow removal of the complete bearing cartridge 8 from within the generator 6. The torque transfer assembly 1 includes the rotary part 84 of the bearing, as will become clear from the drawings. The torque transfer assembly 1 can be regarded as an annular component with a U-shaped cross-section, i.e. two nested cylindrical parts 12, 14 joined by an annular end plate 13, that fits about the axial sleeve 42S.

This torque transfer assembly 1 comprises an outer cylindrical part 12 extending about the outside of the sleeve 42S and connected to the generator rotor 64, and an inner part 14 extending about the inside of the sleeve 42S and connected to the gearbox output shaft 44. In each embodiment, the torque transfer assembly 1 comprises parts that can be detached from each other and/or from another part of the drivetrain so that these parts can be removed from the generator, allowing the generator rotor to be removed without needing to remove the bearing cartridge 8, or facilitating access to the gearbox output shaft 44 without needing to remove the bearing cartridge 8, etc.

The diagrams also show a cable conduit 9 extending from beyond the axial sleeve 42S. As explained above, the cable conduit 9 rotates at the same speed as the low-speed shaft 2 during operation of the wind turbine, and is used to carry cables for the pitch systems arranged at the hub of the wind turbine.

In Figure 2, the inner cylindrical part 14 of the torque transfer assembly 1 is mounted to the gearbox output shaft 44 by an arrangement of splines 78 and an annular arrangement of fasteners 72. The outer cylindrical part 12 of the torque transfer assembly 1 is mounted to the generator rotor 64 by an annular arrangement of fasteners 74.

In this embodiment, the stationary part 82 of the bearing cartridge 8 extends about the outside of the sleeve 42S and is mounted to the sleeve 42S by an annular arrangement of fasteners 73. The rotary part 84 of the bearing cartridge 8 extends about the stationary part 82, and is and is mounted to the generator rotor 64 by an annular arrangement of fasteners 74. Here, the rotary bearing part 84 is the outer part 12 of the torque transfer assembly 1. The inner part 14 of the torque transfer assembly 1 and the annular end plate 13 are realised as one part, which is mounted to the rotary bearing part 84, i.e. to the outer part 12 of the torque transfer assembly 1, by an annular arrangement of fasteners 75.

The diagram shows the complete generator assembly, with a generator end plate 69 and brake disk 68. The diagram also shows aligned through-openings in the gearbox housing 42 and the bearing cartridge 8, providing fluid passages 50 for connection to a gearbox lubrication system. In this way, the spline joint 78 can be incorporated in a straightforward manner with the gearbox lubrication system, even though it is positioned very low on account of the long gearbox output shaft and is effectively positioned in the centre of the generator.

In this type of configuration, a seal 8S is arranged between the rotary bearing part 84 and the stationary bearing part 82 at the upwind end of the bearing cartridge 8. The seal 8S rotates together with the rotary bearing part 84.

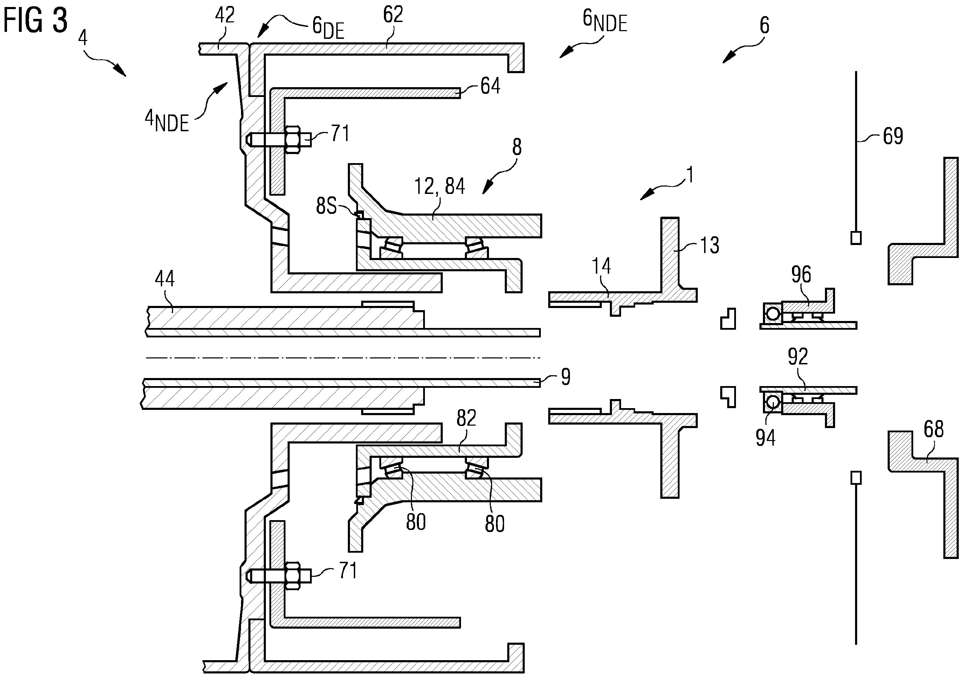

Figure 3 illustrates a stage in the disassembly of the configuration of Figure 2. The end plate 69 and brake disk have been removed, and the generator rotor 64 has been temporarily secured to the gearbox housing 42 using an arrangement of axially oriented fasteners 71.

A seal 96 and support bearing 94 of the cable conduit 9 are then removed. The annular end plate 13 of the torque transfer assembly 1 is then detached by removing fasteners 75. In a subsequent step, the bearing cartridge 8 can be detached by removing fasteners 73, 74 and removed in one piece from inside the generator 6. Alternatively, the bearing 8 can be left in place, and a maintenance procedure can be done on the gearbox output shaft 44, which is now accessible.

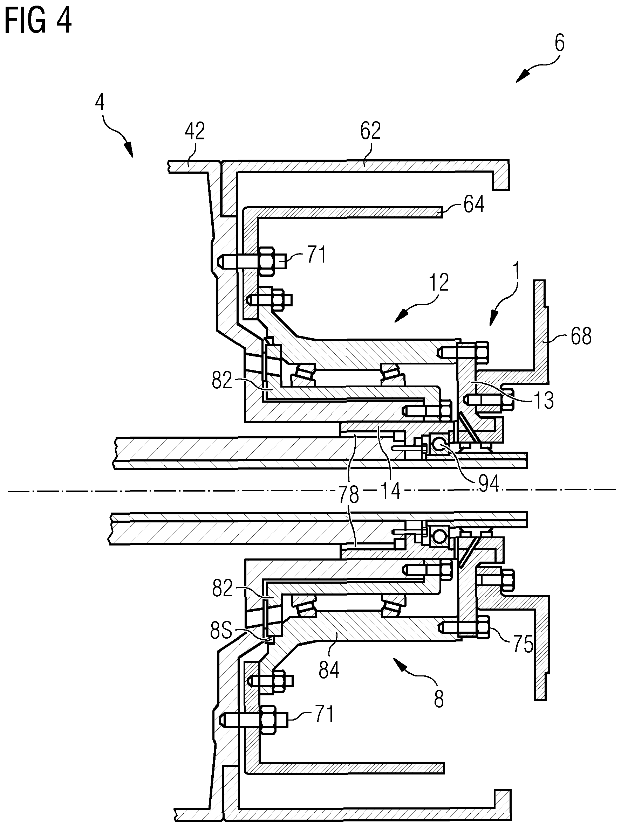

Figure 4 shows an embodiment similar to the embodiment of Figure 2. This diagram shows a support bearing 94 between the inner part 14 of the torque transfer assembly 1 and the cable conduit 9. The diagram also shows bores 86 that enable the gearbox-generator bearing 8 and the support bearing 94 to be connected to a lubrication circuit of the gearbox 4.

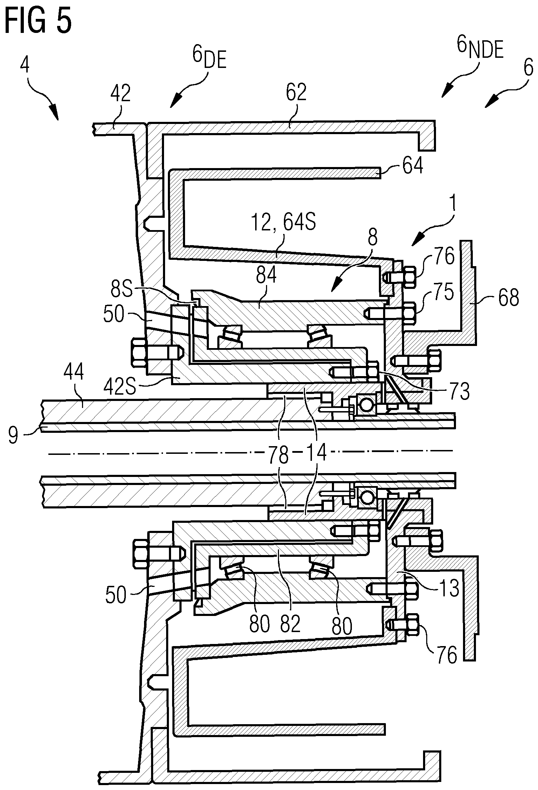

Figure 5 shows a further embodiment, similar to the embodiments shown in Figures 2 - 4. Here, the annular end plate 13 of the torque transfer assembly 1 is wider than the bearing cartridge 8, and is secured both to the rotary bearing part 84 and to a supporting structure 64S extending between the non-drive end 6_{NDE} and the drive end 6_{DE} of the generator, where it terminates at the generator rotor 64. Here, the annular supporting structure 64S acts as the outer part 12 of the torque transfer assembly 1.

This diagram also illustrates a further preferred embodiment of the invention, in which the axial sleeve 42S is mounted to the gearbox housing 42 using an annular arrangement of fasteners as indicated here. The diagram also shows aligned through-openings in the gearbox housing 42, axial sleeve 42S and the bearing cartridge 8, providing fluid passages 50 for connection to a gearbox lubrication system.

In the following embodiments, the gearbox-generator bearing 8 is arranged inside the axial sleeve 42S.

In Figure 6, the torque transfer assembly 1 comprises an inner cylindrical body 14, a radial portion 13 and an outer cylindrical body 12. These can be formed as a single component with U-shaped cross-section. The rotary part 84 of the bearing cartridge 8 is bolted to the inner cylindrical body 14 by an arrangement of axially oriented fasteners 75. In this type of configuration, a seal 8S is arranged between the rotary bearing part 84 and the stationary bearing part 82 at the downwind end of the bearing cartridge 8.

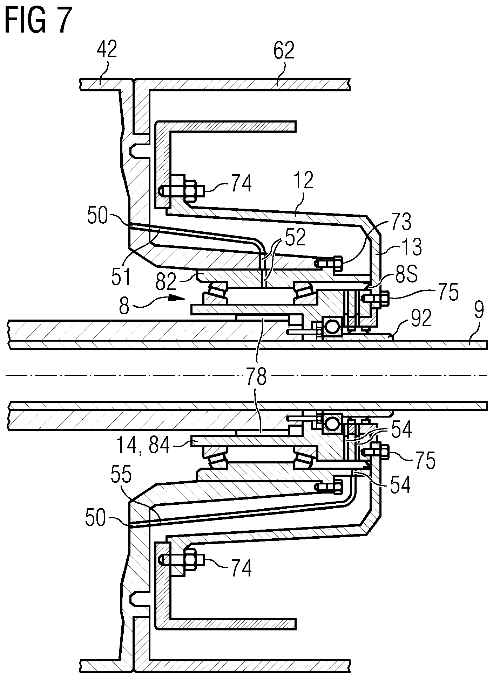

Alternatively, as shown in Figure 7, the torque transfer assembly 1 comprises the rotary bearing part 84 as its inner portion 14. The rotary part 84 of the bearing cartridge 8 is bolted to the radial part 13 of the torque transfer assembly 1 by an arrangement of axially oriented fasteners 75.

In these two embodiments, the outer cylindrical body 12 is bolted to the generator rotor 64 by an arrangement of axially oriented fasteners 74. In this way, during operation of the wind turbine, rotation of the gearbox output shaft 44 is transferred to the torque transfer assembly 1 and to the generator rotor 64. The stationary part 82 of the bearing cartridge 8 extends about the rotary part 84 and is mounted to the inside of the sleeve 42S by an annular arrangement of axially oriented fasteners 73. Figure 7 also shows through-openings 50 in the gearbox housing 42 as well as aligned through-openings 52 in the axial sleeve 42S and the stationary bearing part 82. A fluid supply line 51 of a gearbox lubrication system, extending through the interior of the generator, can thus connect the interior of the bearing cartridge 8 to the gearbox lubrication system. Similarly, through-openings 54 allow lubrication oil to return to the gearbox lubrication system via fluid drain line 55.

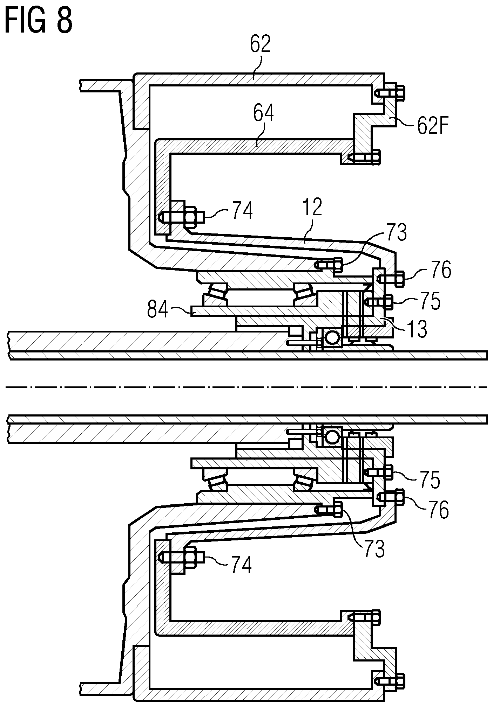

Figure 8 shows a similar embodiment. Here, instead of providing the torque transfer assembly 1 as a single part, the inner cylindrical body 14 and radial portion 13 are formed as one piece, and are connected to the outer cylindrical body 12 by axially oriented fasteners 76. When assembled, these parts 12, 13, 14 form a component with an essentially U-shaped cross-section. Here also, the rotary part 84 of the bearing cartridge 8 is bolted to the inner cylindrical body 14 by an arrangement of axially oriented fasteners 75. The outer cylindrical body 12 is bolted to the generator rotor 64 by an arrangement of axially oriented fasteners 74. The stationary part 82 of the bearing cartridge 8 extends about the rotary part 84 and is mounted to the inside of the sleeve 42S by an annular arrangement of axially oriented fasteners 73. This diagram also shows how the generator rotor 64 can be held stationary for a maintenance procedure. Here, a generator transport fixation bracket 62F secures the rotor 64 to the generator housing 62.

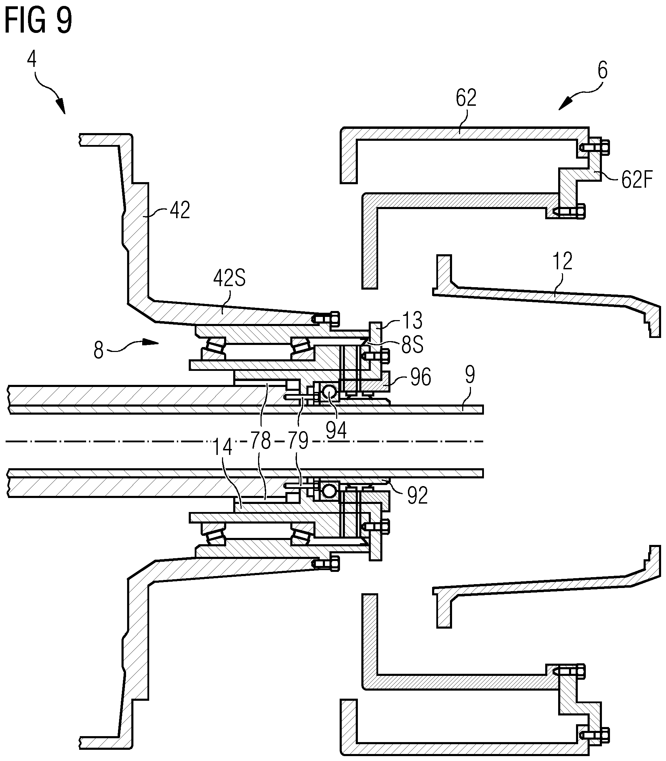

Figure 9 illustrates a further stage in the disassembly of the configuration of Figure 8. The outer part 12 of the torque transfer assembly 1 is detached from the inner part 14 by removing fasteners 76. The outer part 12 can then be lifted outside the generator 6 after releasing fasteners 74. The generator rotor 64 and generator housing 62 (complete with field 6F and armature 6A) are removed after releasing the appropriate fasteners.

In a subsequent step, the seal 96, support cuff 92 and support bearing 94 of the cable conduit 9 can be removed. An axial fixation 79, used to secure the inner cylindrical body 14 of the torque transfer assembly 1 to the gearbox output shaft 44, can then also be accessed and released, allowing the radial portion 13 and inner cylindrical body 14 of the torque transfer assembly to be removed.

In a subsequent step, the bearing cartridge 8 can be released by removing fasteners 73, allowing the bearing cartridge 8 to be removed from inside the generator 6. In an alternative approach, the bearing cartridge 8 and the torque transfer assembly components 12, 13, 14 can be extracted together. Of course, the bearing 8 can be left in place on the axial sleeve 42S while performing a maintenance procedure on the gearbox output shaft 44.

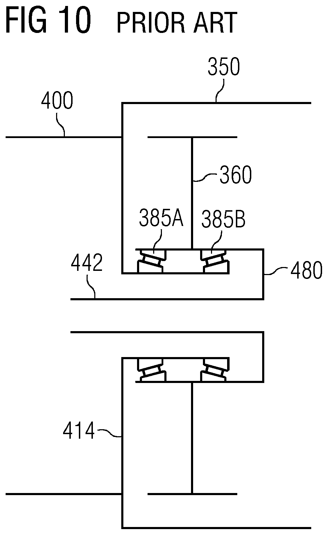

Figure 10 shows a mounting arrangement of gearbox 400 and generator 350 in a prior art drivetrain. Here, in order to access the output shaft 414, it is necessary to disassemble the generator, i.e. to remove the generator rotor 360 along with an inner hub 480. Since the roller bearings 385A, 385B are not contained between a stationary structure and a rotary structure but are separate components, disassembly and assembly stages involve handling the roller bearings 385A, 385B separately, thus making any maintenance procedure complex and time-consuming.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A wind turbine drivetrain comprising
- a planetary gearbox (4) for converting rotation of a low-speed shaft (2) to rotation of a high-speed gearbox output shaft (44);
- an axial sleeve (42S) extending axially outward from the gearbox (4) and enclosing the gearbox output shaft (44);
- a generator (6) mounted coaxially to the gearbox (4), comprising a rotor (64) arranged about the cylindrical sleeve (42S);
- a bearing cartridge (8) arranged between the gearbox (4) and the generator (6), which bearing cartridge (8) comprises a number of roller bearings (80) held between a stationary bearing part (8S) and a rotary bearing part (8R); and
- a torque transfer assembly (1) for transferring rotation of the gearbox output shaft (44) to the generator rotor (64), which torque transfer assembly (1) incorporates the rotary bearing part (8R) and is arranged to extend between the non-drive end of the gearbox output shaft (44) and the generator rotor (64).

2. A wind turbine drivetrain according to the preceding claim, wherein the torque transfer assembly (1) comprises
- an outer part (12) extending about the outside of the cylindrical sleeve (42S) and connected to the generator rotor (64);
- an inner part (14) extending about the inside of the cylindrical sleeve (42S) and connected to the gearbox output shaft (44); and
- a radial portion (13) between the outer part (12) and the inner part (14).

3. A wind turbine drivetrain according to any of the preceding claims, wherein the torque transfer assembly (1) comprises two or more structurally separate parts (12, 13, 14) .

4. A wind turbine drivetrain according to claim 1 or claim 2, wherein the torque transfer assembly (1) is a one-piece structure.

5. A wind turbine drivetrain according to any of the preceding claims, wherein the bearing cartridge (8) is arranged about the outside of the cylindrical sleeve (42S) or about the inside of the cylindrical sleeve (42S).

6. A wind turbine drivetrain according to any of the preceding claims, comprising a spline connection (78) between the gearbox output shaft (44) and the inner part (14) of the torque transfer assembly (1).

7. A wind turbine drivetrain according to any of the preceding claims, wherein the bearing cartridge (8) is connected to a lubrication circuit of the gearbox (4).

8. A wind turbine drivetrain according to the preceding claim, comprising fluid lines (51, 55) and passages (50, 52, 54) arranged to connect a lubrication circuit of the gearbox (4) to the interior of the bearing cartridge (8).

9. A wind turbine drivetrain according to any of the preceding claims, comprising a cable conduit (9) extending through the drivetrain, and arranged to protrude from the gearbox output shaft (44).

10. A wind turbine drivetrain according to claim 9, comprising a support cuff (92) and/or a bearing (94) and/or a seal (96) arranged between the cable conduit (9) and the torque transfer assembly (1).

11. A method of assembling the wind turbine drivetrain according to any of claims 1 to 10, which method comprises steps of:
- mounting the bearing cartridge (8) to the cylindrical sleeve (42S);
- connecting an inner part (14) of the torque transfer assembly (1) to the gearbox output shaft (44);
- arranging the generator rotor (64) about the cylindrical sleeve (42S);
- incorporating the rotary bearing part (8R) in the torque transfer assembly (1); and
- connecting the torque transfer assembly (1) to the generator rotor (64).

12. A method according to the preceding claim, wherein the drivetrain comprises a cable conduit (9), and assembly of the drivetrain comprises a step of providing a support cuff (92) and/or a bearing (94) and/or a seal (96) between a cable conduit (9) and the torque transfer assembly (1).

13. A method according to claim 11 or claim 12, comprising a step of connecting the bearing cartridge (8) to a lubrication circuit of the gearbox (4).

14. A method of performing maintenance on the wind turbine drivetrain according to any of claims 1 to 10, which method comprises the steps of:
- securing the generator rotor (64) to a drivetrain housing (42, 62);
- detaching the torque transfer assembly (1);
- separating the torque transfer assembly (1) from the rotary bearing part (8R);
and
- removing the bearing cartridge (8) from the generator (6) ; and/or
- removing the torque transfer assembly (1) from the generator (6); and/or
- removing the generator rotor (64).

15. A method according to the preceding claim, wherein the generator rotor (64) is secured to the generator housing (62), and the step of removing the generator rotor (64) comprises removing the complete generator (6) while leaving the bearing cartridge (8) in place on the cylindrical sleeve (42S) .
